# EUROPÄISCHE PATENTANMELDUNG

(11) **EP 4 144 566 A1**
(43) Veröffentlichungstag der Anmeldung: **08.03.2023**
(21) Anmeldenummer: 22192321.2
(22) Anmeldetag: 26.08.2022
(51) Int. Cl.: B60L 5/22

(54) **WIPPE FÜR EINEN STROMABNEHMER EINES FAHRZEUGS, STROMABNEHMER UND FAHRZEUG**

(30) Priorität: 31.08.2021 AT 506952021
(71) Anmelder: Siemens Mobility Austria GmbH, 1210 Wien (AT)
(72) Erfinder: Saliger, Christian, 1130 Wien (AT); Smejkal, Clemens, 2214 Auersthal (AT); Schletter, Stefan, 1130 Wien (AT); Wressnigg, Thomas, 1050 Wien (AT)
(74) Vertreter: Deffner, Rolf

(57) **Zusammenfassung**

Die Erfindung bezieht sich auf eine Wippe für einen Stromabnehmer eines Fahrzeugs, mit zumindest einem ersten Schleifstück (11), welches über zumindest eine erste Tragevorrichtung (13) mit zumindest einer ersten Lagervorrichtung (18) gekoppelt ist, wobei das zumindest erste Schleifstück (11) um eine erste Parallele zu einer Schleifstückquerachse (25) des zumindest ersten Schleifstücks (11) drehbar mit der zumindest ersten Lagervorrichtung (18) verbunden ist und wobei die zumindest erste Lagervorrichtung (18) mit einem Stromabnehmergestänge (1) verbindbar ist. Es wird vorgeschlagen, dass das zumindest erste Schleifstück (11) um eine zweite Parallele zu einer Schleifstücklängsachse (26) des zumindest ersten Schleifstücks (11) drehbar und je nach Auslenkung der Wippe selbständig parallel zu einer Stromversorgungsvorrichtung ausrichtbar mit der zumindest ersten Lagervorrichtung (18) verbunden ist.

Dadurch wird eine in Bezug auf eine gleichmäßige Abnutzung vorteilhafte Beweglichkeit des ersten Schleifstücks (11) bewirkt.

## Beschreibung

Die Erfindung betrifft eine Wippe für einen Stromabnehmer eines Fahrzeugs, mit zumindest einem ersten Schleifstück, welches über zumindest eine erste Tragevorrichtung mit zumindest einer ersten Lagervorrichtung gekoppelt ist, wobei das zumindest erste Schleifstück um eine erste Parallele zu einer Schleifstückquerachse des zumindest ersten Schleifstücks drehbar mit der zumindest ersten Lagervorrichtung verbunden ist und wobei die zumindest erste Lagervorrichtung mit einem Stromabnehmergestänge verbindbar ist.

Elektrisch betriebene Fahrzeuge weisen häufig Stromabnehmer (z.B. Einholm- oder Scherenstromabnehmer, Seitenstromabnehmer, Ladestromabnehmer, Stromabnehmer von elektrischen Lastkraftwagen etc.) auf, mittels welchen eine Stromabnahme von einem Fahrdraht, von einer beispielsweise seitlich eines Fahrwegs angeordneten Stromschiene oder von einer Kontakthaube einer Ladestation etc. sowie eine Versorgung von Akkumulatoren und/oder elektrischen Antrieben der Fahrzeuge mit Elektrizität erfolgt.

Beispielsweise weisen Stromabnehmer von Schienenfahrzeugen, bei welchen eine Stromabnahme von einer Oberleitung erfolgt, häufig Wippen auf, bei welchen ein Schleifstück oder eine Mehrzahl an Schleifstücken über Trage-, Feder- und Lagervorrichtungen mit einem Stromabnehmergestänge, welches die Wippe anheben und absenken kann, verbunden ist bzw. sind. Oft reichen bei derartigen Stromabnehmern verfügbare rotatorische Freiheitsgrade der Schleifstücke in Verbindung mit möglichen Verformungen der Federvorrichtungen nicht aus, um eine ungleichmäßige Erwärmung und einen ungleichmäßigen Verschleiß der Schleifstücke in Kontaktbereichen zu der Oberleitung zu vermeiden.

Aus dem Stand der Technik ist beispielsweise die WO 2021/122375 A1 bekannt, welche eine Wippe für einen Stromabnehmer eines Fahrzeugs sowie einen Stromabnehmer zeigt. Die Wippe weist Schleifleisten auf, welche einen Fahrdraht kontaktieren und über Hebel mit Drehgelenken, Torsionsfedern und Gehäuse, in welchen die Torsionsfedern gelagert sind, mit einem Stromabnehmergestänge verbunden sind. Aufgrund der Hebel mit den Drehgelenken können die Schleifleisten Dreh- bzw. Schwenkbewegungen in Bezug auf Parallelen zu einer Fahrzeuglängsachse durchführen.

Der genannte Ansatz weist in seiner bekannten Form den Nachteil einer eingeschränkten Drehbeweglichkeit der Schleifleisten auf.

Der Erfindung liegt daher die Aufgabe zugrunde, eine gegenüber dem Stand der Technik weiterentwickelte Wippe anzugeben, welche eine gleichmäßige Erwärmung und Abnutzung von deren Schleifstück bzw. von deren Schleifstücken ermöglicht.

Erfindungsgemäß wird diese Aufgabe gelöst mit einer Wippe nach Anspruch 1, bei welcher das zumindest erste Schleifstück um eine zweite Parallele zu einer Schleifstücklängsachse des zumindest ersten Schleifstücks drehbar und je nach Auslenkung der Wippe selbständig parallel zu einer Stromversorgungsvorrichtung ausrichtbar mit der zumindest ersten Lagervorrichtung verbunden ist.

Dadurch weist das erste Schleifstück nicht nur einen ersten rotatorischen Freiheitsgrad um die erste Parallele zu der Schleifstückquerachse, sondern zumindest einen weiteren, zweiten rotatorischen Freiheitsgrad um die zweite Parallele zu der Schleifstücklängsachse auf und kann sich daher mit großer Flexibilität parallel zu einer Stromversorgungsvorrichtung (z.B. zu einem Fahrdraht, zu einer Stromschiene etc.) ausrichten. Das erste Schleifstück kann sich in Bezug auf zwei zueinander orthogonale Achsen unabhängig von der ersten Lagervorrichtung einstellen.

Eine Kontaktfläche zwischen dem ersten Schleifstück und der Stromversorgungsvorrichtung kann umfassend genutzt werden, wodurch selbst bei großen Neigungswinkeln der Stromversorgungsvorrichtung (z.B. aufgrund eines Steigungs- oder Gefälleabschnitts einer Oberleitung) eine gleichmäßige Belastung, Beanspruchung, Erwärmung und Abnutzung des ersten Schleifstücks gefördert wird. Eine lokale Überhitzung des ersten Schleifstücks, welche zu übermäßigen Wärmespannungen und Schäden des ersten Schleifstücks führen kann, wird vermieden. Ebenso werden einseitige Verformungen aufgrund von ungleichmäßigem Verschleiß des ersten Schleifstücks, welche eine Stromabnahme erschweren, reduziert.

Vorteile der erfindungsgemäßen Wippe im Hinblick auf eine gleichmäßige Belastung, Beanspruchung, Erwärmung und Abnutzung wirken sich bei breiten Schleifstücken besonders stark aus, da bei großen Schleifstückbreiten bereits geringe Winkelfehler einen nicht zufriedenstellenden Kontaktzustand zwischen den Schleifstücken und einer Stromversorgungsvorrichtung verursachen können.

Die erfindungsgemäße Wippe ermöglicht eine hohe Kontaktgüte zur Stromübertragung zwischen der Stromversorgungsvorrichtung und dem ersten Schleifstück.

Ein Prüfen und manuelles Nachjustieren einer Winkellage des ersten Schleifstücks (z.B. während Wartungs- oder Instandhaltungsmaßnahmen) ist nicht erforderlich.

Weitere vorteilhafte Ausgestaltungen der erfindungsgemäßen Wippe ergeben sich aus den Unteransprüchen.

Beispielsweise ist es günstig, wenn dem zumindest ersten Schleifstück und der zumindest ersten Lagervorrichtung zumindest ein, Drehbewegungen des zumindest ersten Schleifstücks begrenzender, erster Endanschlag zwischengeordnet ist.

Dadurch werden ein Bewegungsbereich des ersten Schleifstücks eingeschränkt und übermäßige Auslenkungen des ersten Schleifstücks vermieden.

Die Beweglichkeit des ersten Schleifstücks wird weiter gefördert, wenn die zumindest erste Tragevorrichtung in Richtung einer Wippenhochachse längenveränderlich ausgebildet ist.

Eine mechanisch robuste Lösung im Hinblick auf Abstützung und Beweglichkeit des ersten Schleifstücks erhält man, wenn die zumindest erste Tragevorrichtung zumindest einen ersten Hebel und einen zweiten Hebel aufweist, welche gelenkig miteinander verbunden sind.

Eine mechanische Entkopplung des ersten Schleifstücks von der ersten Lagervorrichtung wird erreicht, wenn mit der zumindest ersten Tragevorrichtung und mit der zumindest ersten Lagervorrichtung zumindest eine erste Federvorrichtung verbunden ist.

In diesem Zusammenhang kann es hilfreich sein, wenn die zumindest erste Federvorrichtung als Torsionsfeder ausgebildet ist.

Dadurch wird eine besonders kompakte und dennoch robuste sowie verschleißarme Lösung zur mechanischen Entkopplung des ersten Schleifstücks erzielt. Es wird eine Vereinigung einer Federungsfunktion und einer Drehmomentübertragungsfunktion bewirkt.

Der erste rotatorische Freiheitsgrad um die erste Parallele zu der Schleifstückquerachse und der zweite rotatorische Freiheitsgrad um die zweite Parallele zu der Schleifstücklängsachse des ersten Schleifstücks kann beispielsweise mit Drehgelenken umgesetzt werden.

Günstig ist es beispielsweise, wenn ein erstes Drehgelenk, dessen erste Gelenksachse parallel zu der Schleifstückquerachse ausgerichtet ist, und ein zweites Drehgelenk, dessen zweite Gelenksachse parallel zu der Schleifstücklängsachse ausgerichtet ist, miteinander sowie mit dem zumindest ersten Schleifstück und mit der zumindest ersten Tragevorrichtung verbunden sind, wobei das erste Drehgelenk näher an dem zumindest ersten Schleifstück angeordnet ist als das zweite Drehgelenk.

Hilfreich kann es aber auch sein, wenn ein erstes Drehgelenk, dessen erste Gelenksachse parallel zu der Schleifstückquerachse ausgerichtet ist, und ein zweites Drehgelenk, dessen zweite Gelenksachse parallel zu der Schleifstücklängsachse ausgerichtet ist, miteinander sowie mit dem zumindest ersten Schleifstück und mit der zumindest ersten Tragevorrichtung verbunden sind, wobei das zweite Drehgelenk näher an dem zumindest ersten Schleifstück angeordnet ist als das erste Drehgelenk.

Durch diese Maßnahmen wird ein getrennter Tausch des ersten Drehgelenks und des zweiten Drehgelenks ermöglicht. Weiterhin können das erste Drehgelenk und das zweite Drehgelenk dadurch, dass es sich um separate Bauteile handelt, mit voneinander verschiedenen Gelenkseigenschaften ausgeführt sein, wodurch in Bezug auf die erste Parallele zu der Schleifstückquerachse und in Bezug auf die zweite Parallele zu der Schleifstücklängsachse jeweils ein unterschiedliches Bewegungsverhalten des ersten Schleifstücks vorgegeben werden kann.

Eine kompakte Anordnung durch einen geringen Abstand zwischen dem ersten Schleifstück und der ersten Lagervorrichtung bei zugleich ausgeprägter Beweglichkeit des ersten Schleifstücks wird erzielt, wenn ein Gelenklager mit dem zumindest ersten Schleifstück und mit der zumindest ersten Tragevorrichtung verbunden ist, dessen Lagerträger eine kugelsegmentförmige Ausnehmung aufweist, in welcher ein kugelsegmentförmiger Lagerkörper um die erste Parallele zu der Schleifstückquerachse und um die zweite Parallele zu der Schleifstücklängsachse drehbar angeordnet ist.

Eine Vorzugslösung erhält man, wenn das zumindest erste Schleifstück federnd mit der zumindest ersten Tragevorrichtung verbunden ist.

Durch diese Maßnahme wird eine Rückstellung von Auslenkungen des ersten Schleifstücks gefördert.

Weiterhin ist es hilfreich, wenn das zumindest erste Schleifstück schwingungsdämpfend mit der zumindest ersten Tragevorrichtung verbunden ist.

Dadurch werden Risiken im Hinblick auf eine Beschädigung der Wippe aufgrund von Schwingungsbeanspruchungen reduziert. Weiterhin können durch diese Maßnahme Kippbewegungen des ersten Schleifstücks gedämpft werden.

Eine ausgeprägte Beweglichkeit des ersten Schleifstücks bei zugleich bedarfsgerechten Federungs- und Dämpfungseigenschaften erhält man, wenn ein erstes Elastiklager mit dem zumindest ersten Schleifstück und mit der zumindest ersten Tragevorrichtung verbunden ist.

Eine dreidimensionale Rotationsbeweglichkeit des ersten Schleifstücks wird erreicht, wenn das zumindest erste Schleifstück um eine dritte Parallele zu einer Schleifstückhochachse des zumindest ersten Schleifstücks drehbar mit der zumindest ersten Lagervorrichtung verbunden ist.

Die Erfindung bezieht sich ferner auch auf einen Stromabnehmer für ein Fahrzeug mit zumindest einer erfindungsgemäßen Wippe.

Darüber hinaus betrifft die Erfindung ein Fahrzeug mit zumindest einem erfindungsgemäßen Stromabnehmer.

Nachfolgend wird die Erfindung anhand von Ausführungsbeispielen näher erläutert.

Es zeigen beispielhaft:
- Fig. 1:: Eine schematische Darstellung einer beispielhaften Ausführungsvariante eines erfindungsgemäßen Stromabnehmers auf einer beispielhaften Ausführungsvariante eines erfindungsgemäßen, ausschnittsweise gezeigten Fahrzeugs als Seitenriss,
- Fig. 2:: Eine schematische Darstellung eines Ausschnitts aus einer beispielhaften ersten Ausführungsvariante einer erfindungsgemäßen Wippe eines Stromabnehmers, bei welcher zwischen einem ersten Schleifstück und einer ersten Tragevorrichtung zwei Drehgelenke in einer ersten Anordnungsreihenfolge angeordnet sind, als Aufriss,
- Fig. 3:: Eine schematische Darstellung eines Ausschnitts aus einer beispielhaften zweiten Ausführungsvariante einer erfindungsgemäßen Wippe eines Stromabnehmers, bei welcher zwischen einem ersten Schleifstück und einer ersten Tragevorrichtung zwei Drehgelenke in einer zweiten Anordnungsreihenfolge angeordnet sind, als Aufriss,
- Fig. 4:: Eine schematische Darstellung eines Ausschnitts aus einer beispielhaften dritten Ausführungsvariante einer erfindungsgemäßen Wippe eines Stromabnehmers, bei welcher zwischen einem ersten Schleifstück und einer ersten Tragevorrichtung ein Gelenklager angeordnet ist, als Aufriss,
- Fig. 5:: Eine schematische Detaildarstellung eines Gelenklagers als Aufriss, und
- Fig. 6:: Eine schematische Darstellung eines Ausschnitts aus einer beispielhaften vierten Ausführungsvariante einer erfindungsgemäßen Wippe eines Stromabnehmers, bei welcher zwischen einem ersten Schleifstück und einer ersten Tragevorrichtung ein erstes Elastiklager angeordnet ist, als Aufriss.

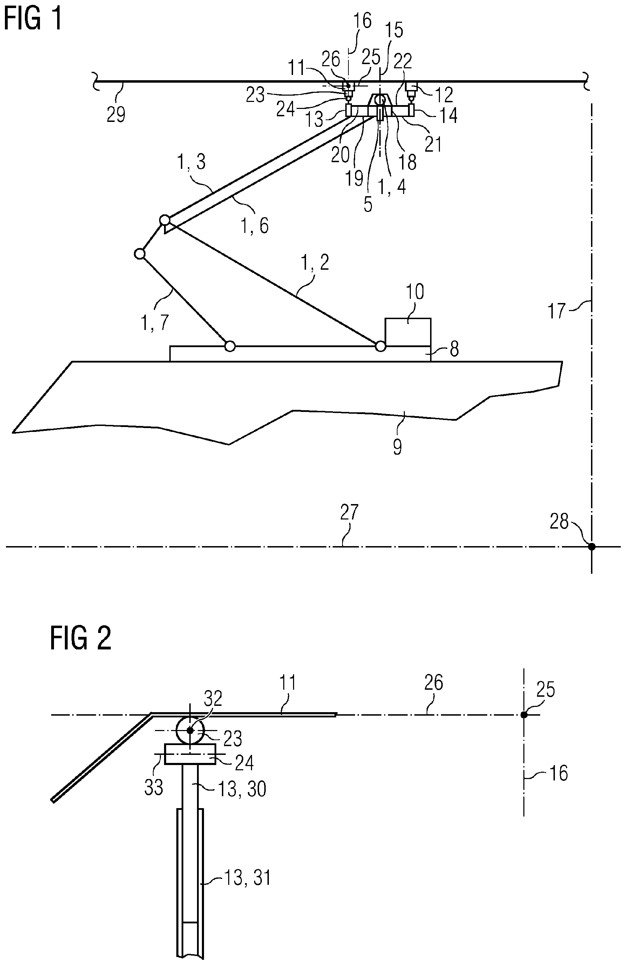

Ein in Fig. 1 dargestellter schematischer Seitenriss zeigt eine beispielhafte Ausführungsvariante eines erfindungsgemäßen Stromabnehmers einer beispielhaften Ausführungsvariante eines erfindungsgemäßen Fahrzeugs, welches als Schienenfahrzeug ausgeführt ist, mit einem Stromabnehmergestänge 1, welches einen Unterarm 2, einen Oberarm 3, eine Scheitelstange 4 mit einem ersten Auflaufhorn 5 und einem nicht sichtbaren zweiten Auflaufhorn, eine Parallelführungsstange 6 sowie eine Kuppelstange 7 aufweist. Der Unterarm 2 sowie die Kuppelstange 7 sind gelenkig mit einem Grundrahmen 8 verbunden, welcher mit einem Dach 9 des Fahrzeugs verbunden ist. Der Stromabnehmer ist somit als Dachstromabnehmer ausgeführt. Zwischen dem Grundrahmen 8 und dem Unterarm 2 ist ein pneumatischer Hebeantrieb 10 zum Heben und Senken des Stromabnehmers vorgesehen.

Der Oberarm 3 ist gelenkig mit dem Unterarm 2 sowie gelenkig mit der Kuppelstange 7 verbunden, die Parallelführungsstange 6 gelenkig mit dem Unterarm 2.

Auf das Stromabnehmergestänge 1 ist eine beispielhafte Ausführungsvariante einer erfindungsgemäßen Wippe, welche als erstes Schleifstück 11 eine erste Schleifleiste sowie als zweites Schleifstück 12 eine zweite Schleifleiste aufweist. Weiterhin umfasst die Wippe eine erste Tragevorrichtung 13, eine zweite Tragevorrichtung 14 sowie eine in Fig. 1 nicht sichtbare dritte Tragevorrichtung und eine in Fig. 1 ebenfalls nicht sichtbare vierte Tragevorrichtung.

Die erste Tragevorrichtung 13, die zweite Tragevorrichtung 14, die dritte Tragevorrichtung und die vierte Tragevorrichtung sind teleskopartig und somit in Richtung einer Wippenhochachse 15, welche parallel zu einer Schleifstückhochachse 16 des ersten Schleifstücks 11 und parallel zu einer Fahrzeughochachse 17 des Fahrzeugs ausgerichtet ist, längenveränderlich ausgebildet.

Die Wippe weist ferner Federvorrichtungen sowie eine erste Lagervorrichtung 18 und eine in Fig. 1 nicht sichtbare zweite Lagervorrichtung auf.

Die erste Lagervorrichtung 18 und die zweite Lagervorrichtung sind über die Scheitelstange 4 mit dem Stromabnehmergestänge 1 verbunden.

Das erste Schleifstück 11 ist über die erste Tragevorrichtung 13, die dritte Tragevorrichtung sowie über eine erste Federvorrichtung 19, eine zweite Federvorrichtung 20 und weitere, in Fig. 1 nicht sichtbare Federvorrichtungen, welche einerseits mit der ersten Tragevorrichtung 13 bzw. der dritten Tragevorrichtung und andererseits mit der ersten Lagervorrichtung 18 bzw. der zweiten Lagervorrichtung verbunden sind, mit der ersten Lagervorrichtung 18 und der zweiten Lagervorrichtung gekoppelt.

Das zweite Schleifstück 12 ist über die zweite Tragevorrichtung 14, die vierte Tragevorrichtung sowie über eine dritte Federvorrichtung 21, eine vierte Federvorrichtung 22 und weitere, in Fig. 1 nicht sichtbare Federvorrichtungen, welche einerseits mit der zweiten Tragevorrichtung 14 bzw. der vierten Tragevorrichtung und andererseits mit der ersten Lagervorrichtung 18 bzw. der zweiten Lagervorrichtung verbunden sind, mit der ersten Lagervorrichtung 18 und der zweiten Lagervorrichtung gekoppelt.

Die erste Federvorrichtung 19, die zweite Federvorrichtung 20, die dritte Federvorrichtung 21, die vierte Federvorrichtung 22 sowie die weiteren Federvorrichtungen sind als Torsionsfedern ausgebildet und weisen längliche Konturen sowie rechteckige Querschnitte auf.

Das erste Schleifstück 11 ist über ein erstes Drehgelenk 23 und ein zweites Drehgelenk 24 sowie weitere zwei Drehgelenke um eine erste Parallele zu einer Schleifstückquerachse 25 des ersten Schleifstücks 11 und um eine zweite Parallele zu einer in Fig. 1 projizierend erscheinenden Schleifstücklängsachse 26 des ersten Schleifstücks 11 drehbar mit der ersten Lagervorrichtung 18 und der zweiten Lagervorrichtung verbunden.

Die Schleifstückquerachse 25 und die erste Parallele sind parallel zu einer Fahrzeuglängsachse 27 des Fahrzeugs ausgerichtet, die Schleifstücklängsachse 26 und die zweite Parallele parallel zu einer in Fig. 1 projizierend erscheinenden Fahrzeugquerachse 28 des Fahrzeugs.

Das erste Drehgelenk 23 und das zweite Drehgelenk 24 sind miteinander sowie mit dem ersten Schleifstück 11 und mit der ersten Tragevorrichtung 13 verbunden, wobei das erste Drehgelenk 23 näher an dem ersten Schleifstück 11 angeordnet ist als das zweite Drehgelenk 24. Das erste Drehgelenk 23 ist oberhalb des zweiten Drehgelenks 24 angeordnet und weist relativ zu dem zweiten Drehgelenk 24 einen Winkelversatz von 90 ° auf.

Die weiteren zwei Drehgelenke sind miteinander sowie mit dem ersten Schleifstück 11 und mit der dritten Tragevorrichtung verbunden und weisen ein mit dem ersten Drehgelenk 23 und dem zweiten Drehgelenk 24 vergleichbares Anordnungsprinzip und eine vergleichbare Funktionalität auf.

Zwischen dem zweiten Schleifstück 12 einerseits und der zweiten Tragevorrichtung 14 sowie der vierten Tragevorrichtung andererseits sind weitere vier Drehgelenke angeordnet, welche ein mit dem ersten Drehgelenk 23 und dem zweiten Drehgelenk 24 vergleichbares Anordnungsprinzip und eine vergleichbare Funktionalität aufweisen. Das zweite Schleifstück 12 weist daher im Hinblick auf dessen Beweglichkeit ein mit dem ersten Schleifstück 11 vergleichbares Funktionsprinzip auf.

Erfindungsgemäß ist es jedoch auch denkbar, dass der Stromabnehmer nur das erste Schleifstück 11 aufweist, d.h. dass auf das zweite Schleifstück 12 verzichtet wird.

Das erste Schleifstück 11 und das zweite Schleifstück 12 liegen an einem Fahrdraht 29 an, wodurch das Fahrzeug bzw. dessen Antrieb über dessen Dach 9 mit Elektrizität versorgt wird.

Das erste Schleifstück 11 und das zweite Schleifstück 12 richten sich aufgrund ihrer Lagerung je nach Auslenkung der Wippe stets selbständig parallel zu einer Ebene, in welcher der Fahrdraht 29 verläuft, aus.

Das erste Schleifstück 11 und das zweite Schleifstück 12 stellen sich dabei in Bezug auf zueinander orthogonale Achsen unabhängig voneinander und unabhängig von der ersten Lagervorrichtung 18 und der zweiten Lagervorrichtung ein.

Erfindungsgemäß ist es auch denkbar, dass der Stromabnehmer mit einem elektrischen Nutzfahrzeug (z.B. einem elektrischen Bus oder einem elektrischen Lastkraftwagen), welches auf einer elektrifizierten Straße oder Autobahn verkehrt, verbunden ist und das Nutzfahrzeug bzw. dessen Antrieb mit Elektrizität versorgt.

In Fig. 2 offenbart einen schematischen Aufriss eines Ausschnitts aus einer beispielhaften ersten Ausführungsvariante einer erfindungsgemäßen Wippe eines Stromabnehmers eines Fahrzeugs, wie er beispielhaft auch in Fig. 1 dargestellt ist, bei welcher zwischen einem ersten Schleifstück 11 und einer ersten Tragevorrichtung 13 ein erstes Drehgelenk 23 und ein zweites Drehgelenk 24 angeordnet sind.

Das erste Schleifstück 11 ist über die erste Tragevorrichtung 13 mit einer ersten Lagervorrichtung 18, wie sie beispielhaft in Fig. 1 gezeigt ist, verbunden.

Die erste Tragevorrichtung 13 ist in Richtung einer Wippenhochachse 15, wie sie beispielhaft in Fig. 1 dargestellt ist, längenveränderlich ausgebildet und weist eine Teleskopstange 30 auf, welche in einem Teleskoprohr 31 der ersten Tragevorrichtung 13 geführt ist.

Das erste Drehgelenk 23, dessen in Fig. 2 projizierend erscheinende erste Gelenksachse 32 parallel zu einer in Fig. 2 projizierend erscheinenden Schleifstückquerachse 25 des ersten Schleifstücks 11 ausgerichtet ist, und das zweite Drehgelenk 24, dessen zweite Gelenksachse 33 parallel zu einer Schleifstücklängsachse 26 des ersten Schleifstücks 11 ausgerichtet ist, sind miteinander sowie mit dem ersten Schleifstück 11 und mit der ersten Tragevorrichtung 13 verbunden, wobei das erste Drehgelenk 23 näher an dem ersten Schleifstück 11 angeordnet ist als das zweite Drehgelenk 24.

Das erste Drehgelenk 23 ist oberhalb des zweiten Drehgelenks 24 angeordnet.

Aufgrund des ersten Drehgelenks 23 ist das erste Schleifstück 11 um eine erste Parallele zu der Schleifstückquerachse 25 drehbar.

Aufgrund des zweiten Drehgelenks 24 ist das erste Schleifstück 11 um eine zweite Parallele zu der Schleifstücklängsachse 26 drehbar.

Die Schleifstückquerachse 25 und die erste Parallele sind parallel zu einer Fahrzeuglängsachse 27, wie sie beispielhaft in Fig. 1 gezeigt ist, ausgerichtet.

Die Schleifstücklängsachse 26 und die zweite Parallele sind parallel zu einer Fahrzeugquerachse 28, wie sie beispielhaft in Fig. 1 dargestellt ist, ausgerichtet.

Erfindungsgemäß ist es auch denkbar, dass das erste Drehgelenk 23 und das zweite Drehgelenk 24 beispielsweise Drehfedern aufweisen, um selbständige Rückstellbewegungen von Auslenkungen des ersten Schleifstücks 11 zu ermöglichen. Ferner ist es möglich, dass beispielsweise das erste Drehgelenk 23 und das zweite Drehgelenk 24 Endanschläge aufweisen, welche Drehbewegungen des ersten Schleifstücks 11 begrenzen.

Die Wippe gemäß Fig. 2 ist bezüglich einer Schleifstückhochachse 16 symmetrisch ausgebildet.

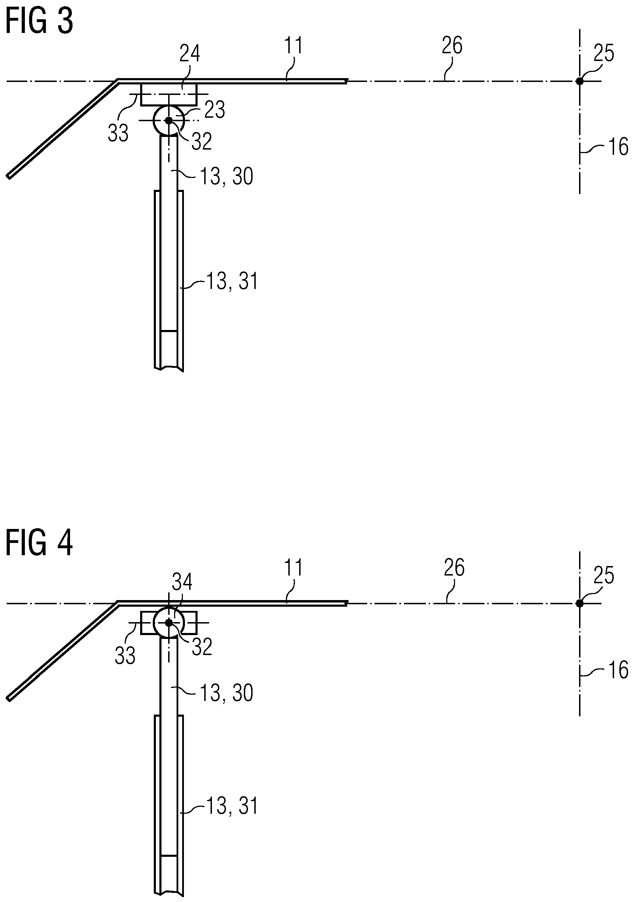

In Fig. 3 ist ein schematischer Ausschnitt aus einer beispielhaften zweiten Ausführungsvariante einer erfindungsgemäßen Wippe eines Stromabnehmers eines Fahrzeugs als Aufriss dargestellt, wobei bei der Wippe zwischen einem ersten Schleifstück 11 und einer ersten Tragevorrichtung 13 ein erstes Drehgelenk 23 und ein zweites Drehgelenk 24 angeordnet sind.

Diese zweite Ausführungsvariante ähnelt jener ersten Ausführungsvariante einer erfindungsgemäßen Wippe, welche in Fig. 2 offenbart ist.

Es werden daher in Fig. 3 gleiche Bezugszeichen wie in Fig. 2 verwendet.

Wie bereits im Zusammenhang mit Fig. 2 beschrieben, sind das erste Drehgelenk 23, dessen erste Gelenksachse 32 parallel zu einer Schleifstückquerachse 25 des ersten Schleifstücks 11 ausgerichtet ist, und das zweite Drehgelenk 24, dessen zweite Gelenksachse 33 parallel zu einer Schleifstücklängsachse 26 des ersten Schleifstücks 11 ausgerichtet ist, miteinander sowie mit dem ersten Schleifstück 11 und mit der ersten Tragevorrichtung 13 verbunden.

Die Wippe ist symmetrisch bezüglich einer Schleifstückhochachse 16 ausgeführt.

Im Unterschied zu jener ersten Ausführungsvariante einer erfindungsgemäßen Wippe gemäß Fig. 2 ist bei der zweiten Ausführungsvariante einer erfindungsgemäßen Wippe gemäß Fig. 3 das zweite Drehgelenk 24 näher an dem zumindest ersten Schleifstück 11 angeordnet ist als das erste Drehgelenk 23. Das erste Drehgelenk 23 ist unterhalb des zweiten Drehgelenks 24 angeordnet.

Fig. 4 zeigt einen schematischen Aufriss eines Ausschnitts aus einer beispielhaften dritten Ausführungsvariante einer erfindungsgemäßen Wippe eines Stromabnehmers eines Fahrzeugs, bei welcher zwischen einem ersten Schleifstück 11 und einer ersten Tragevorrichtung 13 ein Gelenklager 34 angeordnet ist. Diese dritte Ausführungsvariante ähnelt jener ersten Ausführungsvariante einer erfindungsgemäßen Wippe, welche in Fig. 2 offenbart ist.

Es werden daher in Fig. 4 teilweise gleiche Bezugszeichen wie in Fig. 2 verwendet.

Im Unterschied zu jener ersten Ausführungsvariante einer erfindungsgemäßen Wippe gemäß Fig. 2 ist bei der dritten Ausführungsvariante einer erfindungsgemäßen Wippe gemäß Fig. 4 anstelle eines ersten Drehgelenks 23 und eines zweiten Drehgelenks 24 das Gelenklager 34 mit dem ersten Schleifstück 11 und mit der ersten Tragevorrichtung 13 gekoppelt.

Das Gelenklager 34 weist eine in Fig. 4 projizierend erscheinende erste Gelenksachse 32 und eine zweite Gelenksachse 33 auf, welche rechtwinklig zueinander ausgerichtet sind und sich in einem Punkt schneiden.

Die erste Gelenksachse 32 ist parallel zu einer in Fig. 4 projizierend erscheinenden Schleifstückquerachse 25 des ersten Schleifstücks 11 und parallel zu einer Fahrzeuglängsachse 27, wie sie beispielhaft in Fig. 1 gezeigt ist, ausgerichtet.

Die zweite Gelenksachse 33 ist parallel zu einer Schleifstücklängsachse 26 des ersten Schleifstücks 11 und parallel zu einer Fahrzeugquerachse 28, wie sie beispielhaft in Fig. 1 gezeigt ist, ausgerichtet.

Um die erste Gelenksachse 32 und um die zweite Gelenksachse 33 sind Drehbewegungen möglich. Dadurch ist das erste Schleifstück 11 um eine erste Parallele zu der Schleifstückquerachse 25 bzw. der Fahrzeuglängsachse 27 sowie um eine zweite Parallele zu der Schleifstücklängsachse 26 bzw. der Fahrzeugquerachse 28 drehbar.

Die Wippe gemäß Fig. 4 ist bezüglich einer Schleifstückhochachse 16 symmetrisch. Über die erste Tragevorrichtung 13 und eine in Fig. 4 nicht sichtbare weitere Tragevorrichtung sowie über eine mit der ersten Tragevorrichtung 13 verbundene erste Lagervorrichtung 18, wie sie beispielhaft in Fig. 1 gezeigt ist und über eine mit der weiteren Tragevorrichtung verbundene, in Fig. 4 nicht sichtbare zweite Lagervorrichtung ist das erste Schleifstück 11 mit einem Stromabnehmergestänge 1, wie es beispielhaft in Fig. 1 dargestellt ist, gekoppelt.

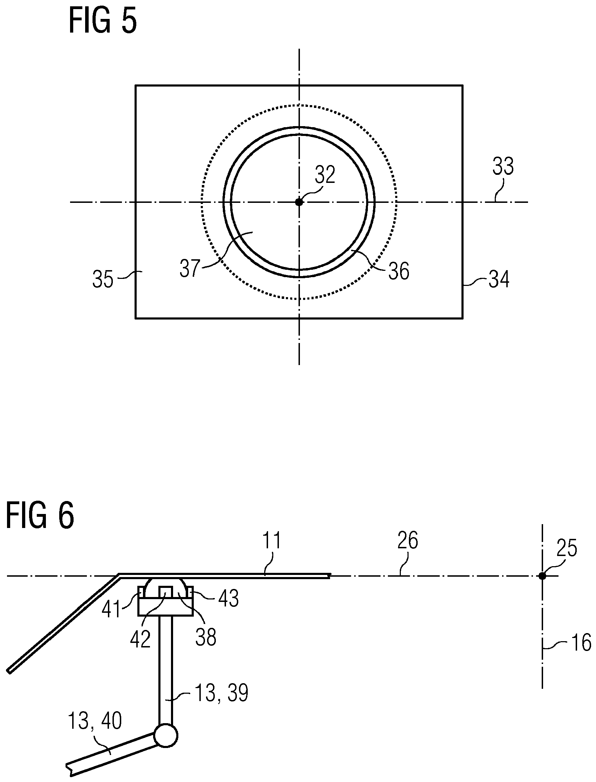

In Fig. 5 ist eine schematische Detaildarstellung eines Gelenklagers 34, wie es in jener beispielhaften dritten Ausführungsvariante einer erfindungsgemäßen Wippe gemäß Fig. 4 eingesetzt werden kann, als Aufriss offenbart.

Das Gelenklager 34 weist einen Lagerträger 35 mit einer kugelsegmentförmigen Ausnehmung 36 auf, in welcher ein kugelsegmentförmiger Lagerkörper 37 angeordnet ist.

Der Lagerträger 35 kann mit einer ersten Tragevorrichtung 13 gemäß Fig. 4 verbunden sein, der Lagerkörper 37 mit einem in Fig. 4 gezeigten ersten Schleifstück 11.

Das Gelenklager 34 weist eine in Fig. 5 projizierend erscheinende erste Gelenksachse 32 und eine zweite Gelenksachse 33 auf, wobei die erste Gelenksachse 32 parallel zu einer in Fig. 4 dargestellten Schleifstückquerachse 25 des ersten Schleifstücks 11 und die zweite Gelenksachse 33 parallel zu einer ebenfalls in Fig. 4 gezeigten Schleifstücklängsachse 26 ausgerichtet sein kann.

Dadurch sind der Lagerkörper 37 und das erste Schleifstück 11 um eine erste Parallele zu der Schleifstückquerachse 25 und um eine zweite Parallele zu der Schleifstücklängsachse 26 drehbar.

Erfindungsgemäß ist es auch vorstellbar, dass das Gelenklager 34 Drehfedern aufweist, um Rückstellbewegungen des Lagerkörpers 37 bzw. des ersten Schleifstücks 11 in Folge von Auslenkungen zu ermöglichen.

Weiterhin ist es denkbar, dass das Gelenklager 34 Endanschläge umfasst, um Drehbewegungen des Lagerkörpers 37 bzw. des ersten Schleifstücks 11 zu begrenzen.

Fig. 6 zeigt eine schematische Darstellung eines Ausschnitts aus einer beispielhaften vierten Ausführungsvariante einer erfindungsgemäßen Wippe eines Stromabnehmers eines Fahrzeugs, bei welcher zwischen einem ersten Schleifstück 11 und einer ersten Tragevorrichtung 13 ein kugelsegmentförmiges erstes Elastiklager 38 angeordnet ist, als Aufriss.

Das erste Schleifstück 11 ist über ein in Fig. 6 nicht dargestelltes zweites Elastiklager mit einer in Fig. 6 ebenfalls nicht gezeigten weiteren Tragevorrichtung verbunden. Die erste Tragevorrichtung 13 ist mit einer ersten Lagervorrichtung 18, wie sie beispielhaft in Fig. 1 offenbart ist, verbunden, die weitere Tragevorrichtung mit einer in Fig. 6 nicht gezeigten zweiten Lagervorrichtung. Die erste Lagervorrichtung 18 und die zweite Lagervorrichtung sind mit einem Stromabnehmergestänge 1, wie es beispielhaft in Fig. 1 dargestellt ist, gekoppelt.

Die erste Tragevorrichtung 13 und die weitere Tragevorrichtung sind als Gestänge mit gelenkig miteinander verbunden Hebeln ausgeführt.

Die erste Tragevorrichtung 13 weist einen ersten Hebel 39 und einen zweiten Hebel 40 auf, welche gelenkig miteinander verbunden sind. Die weitere Tragevorrichtung ist konstruktiv und funktionell gleich wie die erste Tragevorrichtung 13 ausgebildet.

Die erste Tragevorrichtung 13 und die weitere Tragevorrichtung sind aufgrund der Gestänge in Richtung einer Wippenhochachse 15, wie sie in Fig. 1 beispielhaft gezeigt ist, längenveränderlich ausgebildet.

Das erste Elastiklager 38 ist aus einem Elastomer ausgebildet und mit dem ersten Schleifstück 11 und mit der ersten Tragevorrichtung 13 verbunden.

Das erste Schleifstück 11 ist aufgrund von Federungs- und Dämpfungseigenschaften des Elastomers federnd und schwingungsdämpfend mit der ersten Tragevorrichtung 13 gekoppelt.

Das zweite Elastiklager ist konstruktiv und funktionell sowie im Hinblick auf dessen Verbindungstechnik mit dem ersten Schleifstück 11 und der weiteren Tragevorrichtung gleich wie das erste Elastiklager 38 ausgeführt.

Aufgrund des ersten Elastiklagers 38 und des zweiten Elastiklagers ist das erste Schleifstück 11 um eine erste Parallele zu einer Schleifstückquerachse 25 des ersten Schleifstücks 11 bzw. zu einer Fahrzeuglängsachse 27, wie sie beispielhaft in Fig. 1 gezeigt ist, sowie um eine zweite Parallele zu einer Schleifstücklängsachse 26 des ersten Schleifstücks 11 bzw. zu einer Fahrzeugquerachse 28, wie sie beispielhaft in Fig. 1 dargestellt ist, drehbar.

Weiterhin sind aufgrund des ersten Elastiklagers 38 und des zweiten Elastiklagers leichte Drehbewegungen des ersten Schleifstücks 11 um eine dritte Parallele zu einer Schleifstückhochachse 16 des ersten Schleifstücks 11 bzw. zu einer Fahrzeughochachse 17, wie sie beispielhaft in Fig. 1 offenbart ist, möglich.

Um Drehbewegungen des ersten Schleifstücks 11 bezüglich der ersten Parallele und der zweiten Parallele zu begrenzen, weist das erste Elastiklager 38 einen ersten Endanschlag 41, einen zweiten Endanschlag 42, einen dritten Endanschlag 43 sowie einen in Fig. 6 nicht sichtbaren vierten Endanschlag auf.

Der erste Endanschlag 41, der zweite Endanschlag 42, der dritte Endanschlag 43 sowie der vierte Endanschlag sind dem ersten Schleifstück 11 und der ersten Lagervorrichtung 18 zwischengeordnet.

Das zweite Elastiklager weist ebenfalls Endanschläge auf.

### Liste der Bezeichnungen

- 1: Stromabnehmergestänge
- 2: Unterarm
- 3: Oberarm
- 4: Scheitelstange
- 5: Erstes Auflaufhorn
- 6: Parallelführungsstange
- 7: Kuppelstange
- 8: Grundrahmen
- 9: Dach
- 10: Hebeantrieb
- 11: Erstes Schleifstück
- 12: Zweites Schleifstück
- 13: Erste Tragevorrichtung
- 14: Zweite Tragevorrichtung
- 15: Wippenhochachse
- 16: Schleifstückhochachse
- 17: Fahrzeughochachse
- 18: Erste Lagervorrichtung
- 19: Erste Federvorrichtung
- 20: Zweite Federvorrichtung
- 21: Dritte Federvorrichtung
- 22: Vierte Federvorrichtung
- 23: Erstes Drehgelenk
- 24: Zweites Drehgelenk
- 25: Schleifstückquerachse
- 26: Schleifstücklängsachse
- 27: Fahrzeuglängsachse
- 28: Fahrzeugquerachse
- 29: Fahrdraht
- 30: Teleskopstange
- 31: Teleskoprohr
- 32: Erste Gelenksachse
- 33: Zweite Gelenksachse
- 34: Gelenklager
- 35: Lagerträger
- 36: Ausnehmung
- 37: Lagerkörper
- 38: Erstes Elastiklager
- 39: Erster Hebel
- 40: Zweiter Hebel
- 41: Erster Endanschlag
- 42: Zweiter Endanschlag
- 43: Dritter Endanschlag

## Patentansprüche

1. Wippe für einen Stromabnehmer eines Fahrzeugs, mit zumindest einem ersten Schleifstück (11), welches über zumindest eine erste Tragevorrichtung (13) mit zumindest einer ersten Lagervorrichtung (18) gekoppelt ist, wobei das zumindest erste Schleifstück (11) um eine erste Parallele zu einer Schleifstückquerachse (25) des zumindest ersten Schleifstücks (11) drehbar mit der zumindest ersten Lagervorrichtung (18) verbunden ist und wobei die zumindest erste Lagervorrichtung (18) mit einem Stromabnehmergestänge (1) verbindbar ist, **dadurch gekennzeichnet, dass** das zumindest erste Schleifstück (11) um eine zweite Parallele zu einer Schleifstücklängsachse (26) des zumindest ersten Schleifstücks (11) drehbar und je nach Auslenkung der Wippe selbständig parallel zu einer Stromversorgungsvorrichtung ausrichtbar mit der zumindest ersten Lagervorrichtung (18) verbunden ist.

2. Wippe nach Anspruch 1, **dadurch gekennzeichnet, dass** dem zumindest ersten Schleifstück (11) und der zumindest ersten Lagervorrichtung (18) zumindest ein, Drehbewegungen des zumindest ersten Schleifstücks (11) begrenzender, erster Endanschlag (41) zwischengeordnet ist.

3. Wippe nach Anspruch 1 oder 2, **dadurch gekennzeichnet, dass** die zumindest erste Tragevorrichtung (13) in Richtung einer Wippenhochachse (15) längenveränderlich ausgebildet ist.

4. Wippe nach einem der Ansprüche 1 bis 3, **dadurch gekennzeichnet, dass** die zumindest erste Tragevorrichtung (13) zumindest einen ersten Hebel (39) und einen zweiten Hebel (40) aufweist, welche gelenkig miteinander verbunden sind.

5. Wippe nach einem der Ansprüche 1 bis 4, **dadurch gekennzeichnet, dass** mit der zumindest ersten Tragevorrichtung (13) und mit der zumindest ersten Lagervorrichtung (18) zumindest eine erste Federvorrichtung (19) verbunden ist.

6. Wippe nach Anspruch 5, **dadurch gekennzeichnet, dass** die zumindest erste Federvorrichtung (19) als Torsionsfeder ausgebildet ist.

7. Wippe nach einem der Ansprüche 1 bis 6, **dadurch gekennzeichnet, dass** ein erstes Drehgelenk (23), dessen erste Gelenksachse (32) parallel zu der Schleifstückquerachse (25) ausgerichtet ist, und ein zweites Drehgelenk (24), dessen zweite Gelenksachse (33) parallel zu der Schleifstücklängsachse (26) ausgerichtet ist, miteinander sowie mit dem zumindest ersten Schleifstück (11) und mit der zumindest ersten Tragevorrichtung (13) verbunden sind, wobei das erste Drehgelenk (23) näher an dem zumindest ersten Schleifstück (11) angeordnet ist als das zweite Drehgelenk (24) .

8. Wippe nach einem der Ansprüche 1 bis 6, **dadurch gekennzeichnet, dass** ein erstes Drehgelenk (23), dessen erste Gelenksachse (32) parallel zu der Schleifstückquerachse (25) ausgerichtet ist, und ein zweites Drehgelenk (24), dessen zweite Gelenksachse (33) parallel zu der Schleifstücklängsachse (26) ausgerichtet ist, miteinander sowie mit dem zumindest ersten Schleifstück (11) und mit der zumindest ersten Tragevorrichtung (13) verbunden sind, wobei das zweite Drehgelenk (24) näher an dem zumindest ersten Schleifstück (11) angeordnet ist als das erste Drehgelenk (23) .

9. Wippe nach einem der Ansprüche 1 bis 6, **dadurch gekennzeichnet, dass** ein Gelenklager (34) mit dem zumindest ersten Schleifstück (11) und mit der zumindest ersten Tragevorrichtung (13) verbunden ist, dessen Lagerträger (35) eine kugelsegmentförmige Ausnehmung (36) aufweist, in welcher ein kugelsegmentförmiger Lagerkörper (37) um die erste Parallele zu der Schleifstückquerachse (25) und um die zweite Parallele zu der Schleifstücklängsachse (26) drehbar angeordnet ist.

10. Wippe nach einem der Ansprüche 1 bis 9, **dadurch gekennzeichnet, dass** das zumindest erste Schleifstück (11) federnd mit der zumindest ersten Tragevorrichtung (13) verbunden ist.

11. Wippe nach einem der Ansprüche 1 bis 10, **dadurch gekennzeichnet, dass** das zumindest erste Schleifstück (11) schwingungsdämpfend mit der zumindest ersten Tragevorrichtung (13) verbunden ist.

12. Wippe nach einem der Ansprüche 1 bis 6, **dadurch gekennzeichnet, dass** ein erstes Elastiklager (38) mit dem zumindest ersten Schleifstück (11) und mit der zumindest ersten Tragevorrichtung (13) verbunden ist.

13. Wippe nach einem der Ansprüche 1 bis 12, **dadurch gekennzeichnet, dass** das zumindest erste Schleifstück (11) um eine dritte Parallele zu einer Schleifstückhochachse (16) des zumindest ersten Schleifstücks (11) drehbar mit der zumindest ersten Lagervorrichtung (18) verbunden ist.

14. Stromabnehmer für ein Fahrzeug mit zumindest einer Wippe nach einem der Ansprüche 1 bis 13.

15. Fahrzeug mit zumindest einem Stromabnehmer nach Anspruch 14.
